# EUROPEAN PATENT APPLICATION

(11) **EP 3 514 363 A1**
(43) Date of publication of application: **24.07.2019**
(21) Application number: 18213927.9
(22) Date of filing: 19.12.2018
(51) Int. Cl.: F02K 1/12, F02K 1/82

(54) **AIRCRAFT NOZZLE**

(30) Priority: 19.01.2018 GB 201800857
(71) Applicant: Rolls-Royce plc, London SW1E 6AT (GB)
(72) Inventor: Colebrooke, Jack, Derby, Derbyshire DE24 8BJ (GB)
(74) Representative: Rolls-Royce plc

(57) **Abstract**

There is disclosed a flap for a variable area exhaust nozzle of a gas turbine engine. The flap comprises a support structure and a gas shield connected to the support structure, wherein the support structure is corrugated to accommodate thermal expansion of the gas shield in a direction of corrugation.

## Description

The technology described herein concerns an aircraft exhaust nozzle and, more particularly, a flap for a variable area exhaust nozzle of a gas turbine engine.

Gas turbine engines used in some aircraft include exhaust systems that have variable area exhaust nozzles. Variable area exhaust nozzles may include articulated flaps, or petals, that are moveable with respect to one another to vary the area of the exhaust nozzles both to control the engine operating conditions and to optimise the propulsion of the aircraft.

A conventional flap for a variable area exhaust nozzle comprises a monolithic or fabricated gas shield having a backbone which is integrally fixed and connected thereto. The gas shield may be pivot-able at one end about a static wall of the engine or the end of another flap of the variable area exhaust nozzle. The backbone may be connected to an actuator arm of the gas turbine engine for selectively varying the position of the gas shield.

The gas shield is typically in the form of a panel having a gas flowpath surface that is exposed to hot combustion gases in an exhaust stream of the nozzle, and a backside surface (which includes the backbone) that is in a cooler environment. This temperature differential across both surfaces can cause failure, such as a fracture at the connection between the gas shield and the backbone of the flap due to strain caused by thermal expansion of the gas shield relative to the backbone.

While it is known to increase the thickness of the flap in order to increase its resilience to thermal strain, this has the disadvantage of increasing the overall weight of the flap and its cost of manufacture. Therefore, other arrangements have been developed to increase the resilience of a flap to thermal strain. In particular, it is known to provide a flap having a gas shield comprising a plurality of interlocking segments that are (immovably) fixed to the backbone in use.

A disadvantage of such a design is that the number of parts, and therefore the assembly time and risk of losing one or more parts during operation, increases.

Alternative variable area exhaust nozzles for gas turbine engines therefore remain an area of interest.

According to an aspect of the technology described herein, there is provided a flap for a variable area exhaust nozzle of a gas turbine engine, comprising a support structure and a gas shield connected to the support structure; wherein the support structure is corrugated to accommodate thermal expansion of the gas shield in a direction of corrugation.

The support structure may have a plurality of corrugations in the form of alternating peaks and troughs extending in the direction of corrugation. The gas shield may have a substantially planar surface and the support structure may be compliant in a planar direction of the gas shield.

The support structure may have a first plurality of corrugations in a first corrugation direction and a second plurality of corrugations in a second corrugation direction. The first and second plurality of corrugations may overlap. The first and second plurality of corrugations may form a first grid of contact points at which the support structure is connected to the gas shield.

The support structure may be compliant such that a pitch between contact points in the first grid varies to accommodate thermal expansion of the gas shield. Adjacent contact points in the first grid may be separated by a first distance, at a first temperature of the gas shield; and when the support structure is subjected to an applied force due to a thermal expansion of the gas shield at a second temperature that is higher than the first temperature, the adjacent contact points in the first grid may move such that they are separated by a second distance that is greater than the first distance.

The first and second plurality of corrugations may form a second grid of contact points at which the support structure is connected to a mount such as a backing plate or a housing wall. Movement of contact points of the first grid may be relative to the contact points of the second grid.

There may be a space defined between the corrugated support structure and the gas shield. The space may be configured to allow a cooling fluid to flow therein.

The gas shield may comprise a plurality of cooling holes extending therethrough from a shielded surface of the gas shield to a flowpath surface of the gas shield. The cooling holes may be configured to allow cooling fluid to flow from the space between the support structure and the shielded surface to the flowpath surface.Although the technology described herein has been described with respect to the flap itself, it will be appreciated that the technology described herein is applicable more widely to the exhaust nozzle itself.

Thus according to an aspect of the technology described herein there is provided a variable area exhaust nozzle for a gas turbine engine, comprising a flap in accordance with any one of the above statements.

The technology described herein also extends to the gas turbine engine itself. Thus according to an aspect of the technology described herein there is provided a gas turbine engine comprising a flap in accordance with any one of the above statements.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a side view of a gas turbine engine that includes a variable area exhaust nozzle having a flap adapted to adjust various flow streams as they exit the engine;
**Figure 3** illustrates a flap of the variable area exhaust nozzle in accordance with an embodiment of the technology described herein;
**Figure 4** illustrates two cross-sectional side views of the flap of the variable area exhaust nozzle, in accordance with an embodiment of the technology described herein; and
**Figure 5** shows a cross-sectional side view of the flap of the variable area exhaust nozzle having a plurality of holes in accordance with another embodiment of the technology described herein.

In the Figures, like reference numerals are used to refer to like features, where appropriate.

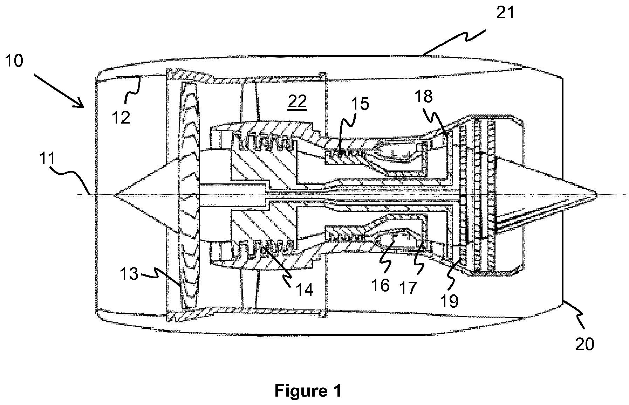

With reference to **Figure 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and at least part of the exhaust nozzle 20.

The gas turbine engine 10 works in the conventional manner so that air entering the intake 12 is accelerated by the fan 13 to produce two air flows: a first air flow into the engine core at which the intermediate pressure compressor 14 is located, and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by a suitable interconnecting shaft.

Other gas turbine engines to which the technology described herein may be applied may have alternative configurations. By way of example such engines may have an alternative number of air flows, interconnecting shafts (e.g. two) and/or an alternative number of compressors and/or turbines. Further the engine may comprise a gearbox provided in the drive train from a turbine to a compressor and/or fan.

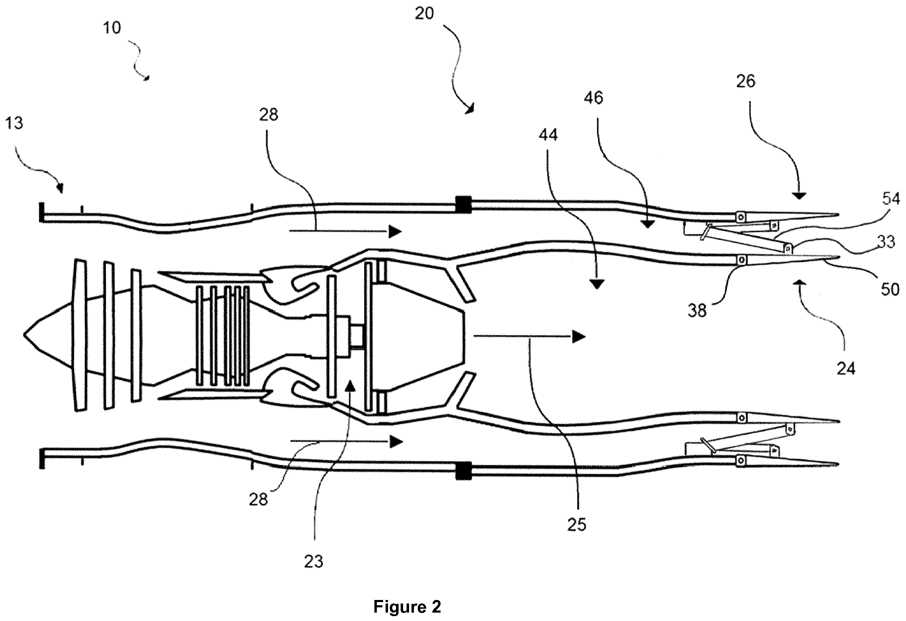

**Figure 2** illustrates a gas turbine engine 10 having features corresponding to those described with respect to Figure 1. The gas turbine engine 10 of Figure 2 has a variable area exhaust nozzle 20.

As can be seen in Figure 2, air entering the intake is compressed by the fan 13 to produce two air flows: a first (pressurised) air flow 25 into the engine core 23 (that includes the intermediate pressure compressor 14 of Figure 1, for example) and a second air flow 28 of bypass air that is passed around the engine core 23.

The nozzle 20 is coupled to the engine core 23, and the nozzle 20 includes an inner, primary nozzle 24 and an outer, secondary nozzle 26. The primary nozzle 24 is arranged to adjust the first air flow 25 of core air. The secondary nozzle 26 cooperates with the primary nozzle 24 to adjust the second air flow 28 of bypass air. The nozzle 20 illustratively includes a primary passageway 44 and a secondary passageway 46 in addition to the primary and secondary nozzles 24, 26, as shown in Figure 2. The first air flow 25 is conducted through the primary nozzle 24 via the primary passageway 44. The second air flow 28 is conducted through the secondary nozzle 26 via the secondary passageway 46. By controlling the flow of air through and around the engine core 23, the air flow nozzles 24, 26 adjust (or trim) the operating point of the gas turbine engine 10.

The primary nozzle 24 includes a flap 50 and an actuator (or strut) 54 connected to the flap 50 by an actuator connector 33 (which forms the backbone of the flap). The flap 50 is mounted to pivot relative to a static wall of the engine, and in some cases relative to another flap (not shown), via a pivot connector 38. The actuator 54 is configured to pivot the flap 50 to adjust the air flow outlet area. Adjustment of the outlet area via the actuator 54 adjusts the first air flow 25 that passes through the primary nozzle 24. Additionally, because the secondary passageway 46 is partially defined by flap 50, adjustment of the outlet area adjusts the secondary passageway 46 and the second air flow 28 that passes through the secondary passageway 46.

In one example, the actuator 54 may be embodied as, or otherwise include, a hydraulically-operated actuator such as a hydraulic piston. In another example, the actuator 54 may be embodied as, or otherwise include, an electrically-powered actuator such as an electrically-powered linear actuator.

It will be appreciated that secondary passageway 46 (which receives second air flow 28) will be exposed to a much cooler environment than that in the primary passageway 44 (which receives high pressure exhaust gas from the first air flow 25) on the other side (the flowpath surface side) of the primary nozzle 24. The temperature differential can cause distortion and can lead to premature wear fatigue (and thus failure) of the primary nozzle 24. For example, the temperature differential may cause any seals formed between flap 50 and various connectors (such as the actuator and pivot connectors 33, 38) to fail.

It will be appreciated that while in the arrangement of Figure 2 there are two airflows and corresponding passageways 44 and 46, this is not required. There may be only a single passageway for receiving one or more air flows, or more than two passageways (and corresponding air flows), as desired.

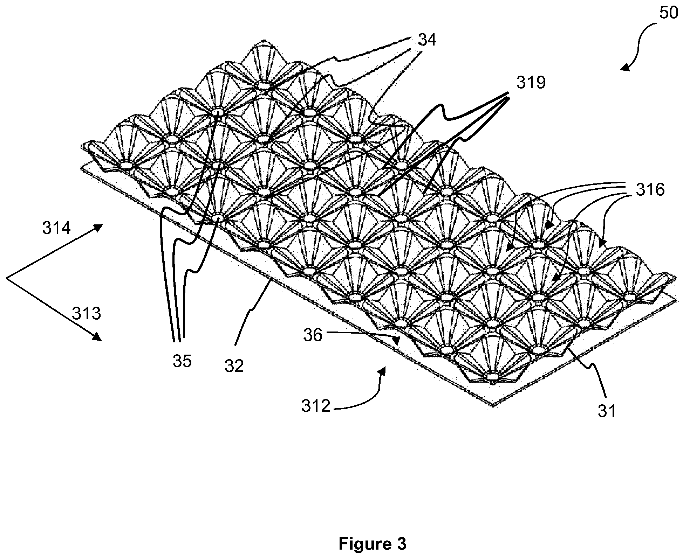

**Figure 3** shows flap 50 of the primary nozzle 24 of Figure 2 in greater detail and in accordance with embodiments of the technology described herein.

The flap 50 comprises a support structure 31 and a gas shield 32 attached thereto. The support structure 31 reacts to forces on the gas shield 32.

The gas shield 32 is in the shape of a plate or sheet which may be formed from a single piece of material such as a (e.g. rigid) sheet metal. The gas shield 32 has a planar flowpath side 312 (i.e. a planar surface) which will be exposed during operation to the hot exhaust gas in primary passageway 44, and a shielded surface 36 on the opposite side to the flowpath side 312 which is shielded from the hot exhaust gas in primary passageway 44 and may be exposed to a cooler gas flow. The gas shield 32 will therefore serve to shield the support structure 31 (and any other associated elements) from the high temperature exhaust gases in passageway 44.

Although not shown in Figure 3, the support structure 31 may be substantially enclosed within a housing (not shown) which may be coupled to an actuator connector and/or a pivot connector as described above (for example, the connectors may be coupled to a wall of the housing). The housing may be formed at least in part by the gas shield 32.

As shown in Figure 3, the support structure 31 is corrugated in that it has a plurality of alternating peaks 34 and troughs 35 extending in two co-planar directions. In particular, the support structure 31 has a first plurality of corrugations in the form of peaks 34 and troughs 35 extending in a first corrugation direction 313 corresponding to the longitudinal direction of flow through the nozzle and a second plurality of corrugations in the form of peaks 34 and troughs 35 extending in a second corrugation direction 314 corresponding to a circumferential direction around the nozzle that is perpendicular to the first corrugation direction 313. The first and second plurality of corrugations overlap to form a grid of indentations or depressions 316 on the surface of the support structure 31. In this example, the grid of indentations resembles half an egg box. The support structure 31 may comprise sheet metal that has been stamped or pressed to include the corrugations. The support structure may comprise a single piece of sheet metal.

The intersections between respective troughs 35 of the first and second plurality of corrugations (i.e. at the centre of respective depressions 316) define a first grid of contact points which are connected to the gas shield 32. The contact points in the illustrated example are in the same plane for connecting to the planar gas shield 32.

The contact points may be connected to the gas shield 32 by any suitable means. In the example of Figure 3 the contact points 35 of the support structure 31 are spot welded to the gas shield 32, although any suitable means of connection can be used.

Additionally, the intersections between respective peaks 34 of the first and second plurality of corrugations define a second grid of contact points. The second grid of contact points may be connected to a mount such as a backing plate (not shown) for mounting to a support structure of the engine. For example, the mount may have an actuator connector for securing the actuator (or strut) 54 to the flap 50. The mount may be coupled to a support structure of the engine via an articulated linkage and so may comprise an aft pivot connector for connecting to the articulated linkage.

The corrugated support structure 31 of Figure 3 may be described as having the form of an egg-box in that the lowest point of each depression 316 of the grid of depressions 316 is bounded on all sides by walls formed by the two sets of corrugations. This configurationis advantageous in that it will accommodate expansion of the gas shield 32 in multiple directions including the first and second corrugation directions 313, 314 in the plane of the gas shield 32, and other directions in the plane of the gas shield 32 which include at least a component of either one of the first and second corrugation directions 313, 314. In particular, when the support structure 31 is subjected to an applied force due to thermal expansion of the gas shield 32 (resulting from exposure of the gas shield 32 to the high temperature exhaust gases during operation), the pitch between contact points in the first grid, at respective troughs 35 of the support structure 31, will vary to accommodate thermal expansion of the gas shield 32. In particular, the distance between adjacent contact points in the first grid will increase in directions parallel with the direction of expansion of the gas shield 32.

Correspondingly, the support structure 31 will accommodate a contraction of the gas shield 32 due to a decrease in temperature of the gas shield 32. As such, the support structure 31 will undergo an elastic deformation when subjected to an applied force due to thermal expansion or contraction of the gas shield 32. In that sense, the support structure 31 is compliant to thermal expansion of the gas shield 32.

The corrugated structure and thus the elastic deformability of the support structure 31 permits a difference in thermal expansion between the gas shield 32 and a mount to which the support structure 31 is mounted to be accommodated by deformation of the support structure in response to a tensile (or compressive) forces between the gas shield 32 and the mount.

Whilst Figure 3 shows the contact points in the first grid and the second grid being separated by an equal distance in each of the co-planar corrugation directions 313, 314 (before thermal expansion of the gas shield 32), in other examples the contact points may have different distances of separation in different directions 313, 314.

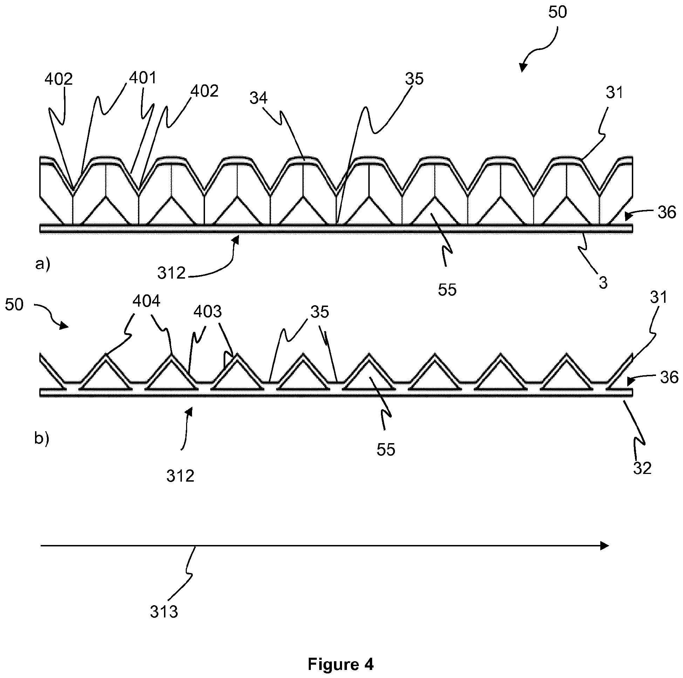

**Figure 4** illustrates two cross-sectional side views taken along the first corrugation direction 313 of the flap 50 of Figure 3. In particular, Figure 4a shows a cross-sectional view of the flap 50 cut along ridge lines 319 between adjacent peaks 34 in the first corrugation direction 313. Figure 4b shows a cross-sectional view of the flap 50 cut across the ridges 319 between adjacent peaks 34 in the second corrugation direction 314 and along the troughs 35 in the first corrugation direction 313.

As can be seen in Figure 4, each one of the peaks 34 and troughs 35 is locally flattened to have a substantially planar profile. This may improve the connection of the support structure 31 to a mount (not shown) or to the gas shield 32, compared to arrangements having pointed peaks and troughs, for example.

As shown in Figure 4a, the superposition of the two corrugations results in corrugation of a ridge line 319 defined by the second corrugation direction 314 and extending along the first corrugation direction 313. Adjacent peaks 34 are connected in the first corrugation direction 313 by corrugated lateral sides 401 defining a local minima 402 therebetween. Likewise, as shown in Figure 4b, adjacent troughs 35 are connected in the first corrugation direction 313 by corrugated lateral sides 403 defining a local maxima 404 therebetween.

As shown in Figure 4, the corrugated support structure 31 defines a space 55 between the peaks 34 (and ridges 319) of the support structure 31 and the shielded surface 36 of the gas shield 32. The space 55 may be configured to allow a cooling fluid to flow therein so as to cool the gas shield 32, and thus reduce a temperature difference between the relatively hot gas shield 32 and the cooler support structure 31. When the corrugated support structure 31 is substantially enclosed within a housing (not shown), and the cooling fluid includes cooling air, the housing may advantageously allow the cooling air to form a cold air plenum within the housing between the support structure 31 and the gas shield 32.

Although Figure 4 shows the corrugations in the first corrugation direction 313 only, it will be appreciated that in the arrangement of Figures 3 and 4 the support structure 31 has the same corrugated profiles in the second corrugation direction 314 between adjacent peaks 34 and between adjacent troughs 35. However, it is not a requirement for the support structure 31 to have the same corrugated profile(s) in both directions. In an embodiment (not shown), the first plurality of corrugations in the first corrugation direction 313 has a different (e.g. cross-sectional) profile to that of the second plurality of corrugations in the second corrugation direction 314.

Furthermore, it will be appreciated that although the support structure 31 has been described above with respect to the drawings as having a series of alternating planar and pointed surfaces, this is not required. The corrugations may have any suitable cross-sectional shape. For example, corrugations extending in a given direction may include a series of curvilinear walls (e.g. in the form of a sinusoid) or may have linear walls disposed at angles relative to one another (e.g. in the form of teeth, e.g. a saw-tooth), or any combination thereof, as appropriate.

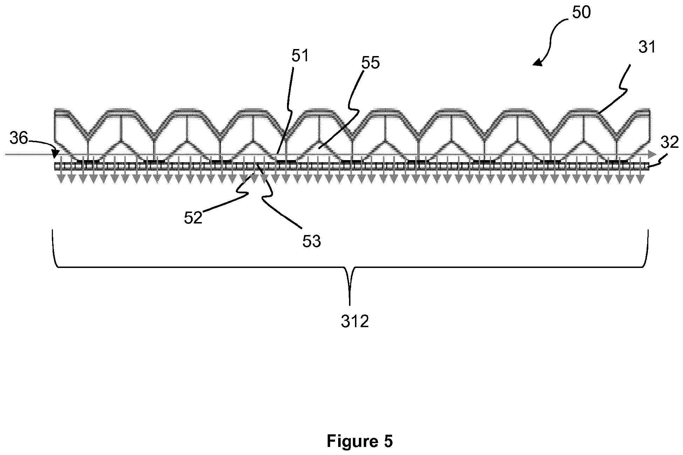

**Figure 5** shows a cross-sectional view of a flap 50 substantially as described above with respect to Figure 4a. In this example, the gas shield 32 includes a plurality of cooling holes 53 extending therethrough from the shielded surface 36 of the gas shield 32 to a flowpath surface 312 of the gas shield 32, wherein the cooling holes 53 are configured to allow cooling fluid to flow therethrough from the space 55 between the support structure 31 and the shielded surface 36 to the flowpath surface 36.

As denoted by arrows 52 in Figure 5, the cooling holes 53 allow cold plenum fluid 51 in the gap 55 to flow from the gap 55 to the flowpath surface 312 of the gas shield 32. This may be advantageous to cool the gas shield 32, e.g. by effusion or film cooling, thereby reducing the thermal strain on the gas shield 32 and the support structure 31.

It will be understood that the technology described herein is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A flap (50) for a variable area exhaust nozzle (20) of a gas turbine engine (10), comprising a support structure (31) and a gas shield (32) connected to the support structure (31);
wherein the support structure (31) is corrugated to accommodate thermal expansion of the gas shield (32) in a direction of corrugation (313, 314).

2. A flap (50) as claimed in claim 1, wherein the support structure (31) has a plurality of corrugations in the form of alternating peaks (34) and troughs (35) extending in the direction of corrugation.

3. A flap (50) as claimed in claim 1 or 2, wherein the gas shield (32) has a substantially planar surface (312, 36) and the support structure (31) is compliant in a planar direction of the gas shield (32).

4. A flap (50) as claimed in claim 1, 2 or 3, wherein the support structure (31) has a first plurality of corrugations (34, 35) in a first corrugation direction (313) and a second plurality of corrugations (34, 35) in a second corrugation direction (314).

5. A flap (50) as claimed in claim 4, wherein the first and second plurality of corrugations (34, 35) overlap.

6. A flap (50) as claimed in claim 4 or 5, wherein the first and second plurality of corrugations (34, 35) form a first grid of contact points at which the support structure (31) is connected to the gas shield (32).

7. A flap (50) as claimed in claim 6, wherein the support structure (31) is compliant such that a pitch between contact points in the first grid varies to accommodate thermal expansion of the gas shield.

8. A flap (50) as claimed in claim 7, wherein:
adjacent contact points in the first grid are separated by a first distance, at a first temperature of the gas shield (32); and
when the support structure (31) is subjected to an applied force due to a thermal expansion of the gas shield (32) at a second temperature that is higher than the first temperature, the adjacent contact points in the first grid move such that they are separated by a second distance that is greater than the first distance.

9. A flap (50) as claimed in claim 6, 7 or 8, wherein the first and second plurality of corrugations (34, 35) form a second grid of contact points at which the support structure (31) is connected to a mount such as a backing plate or a housing wall.

10. A flap (50) as claimed in any one of the preceding claims, wherein there is a space (55) defined between the corrugated support structure (31) and the gas shield (32), wherein the space (55) is configured to allow a cooling fluid (51) to flow therein.

11. A flap (50) as claimed in claim 10, wherein the gas shield (32) comprises a plurality of cooling holes (53) extending therethrough from a shielded surface (36) of the gas shield (32) to a flowpath surface (312) of the gas shield (32), wherein the cooling holes (53) are configured to allow cooling fluid (52) to flow from the space (55) between the support structure (31) and the shielded surface (36) to the flowpath surface (312).

12. A variable area exhaust nozzle (20) for a gas turbine engine (10), comprising a flap (50) as claimed in any one of the preceding claims.

13. A gas turbine engine (10) comprising a flap (50) as claimed in any one of claims 1-11 or a variable area exhaust nozzle (20) as claimed in claim 12.
